# EUROPEAN PATENT SPECIFICATION

(11) **EP 2 833 264 B1**
(45) Date of publication and mention of the grant of the patent: **24.06.2020**
(21) Application number: 12872541.3
(22) Date of filing: 29.03.2012
(51) Int. Cl.: G06F 9/46, G06F 9/48

(54) **VIRTUAL COMPUTER SCHEDULE METHOD**
VIRTUELLES COMPUTERPLANUNGSVERFAHREN
PROCÉDÉ D'ORDONNANCEMENT D'ORDINATEURS VIRTUELS

(43) Date of publication of application: 04.02.2015
(73) Proprietor: Hitachi, Ltd., Tokyo 100-8280 (JP)
(72) Inventor: KIM, Sungho, Tokyo 100-8280 (JP); OHIRA, Takahiro, Tokyo 100-8280 (JP)
(74) Representative: MERH-IP Matias Erny Reichl Hoffmann Patentanwälte PartG mbB
(86) International application number: PCT/JP2012/058295
(87) International publication number: WO 2013/145199

(56) References cited:
- EP-A2- 1 674 987
- JP-A- 2005 043 959
- US-A1- 2004 268 347
- US-A1- 2006 294 238
- US-A1- 2008 155 537
- US-A1- 2010 191 845
- US-A1- 2011 083 132
- US-A1- 2011 197 003
- US-A1- 2011 302 589
- US-B1- 7 136 800
- US-B1- 7 707 578
- US-B1- 7 765 543
- FIGUEIREDO R J ET AL: "A case for grid computing on virtual machines", PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003; [INTERNATIONAL CONFERENCE ON DISTRIBUTED COMPUTING SYSTEMS], LOS ALAMITOS, CA : IEEE COMP. SOC, US, vol. CONF. 23, 19 May 2003 (2003-05-19), pages 550-559, XP010642326, DOI: 10.1109/ICDCS.2003.1203506 ISBN: 978-0-7695-1920-3
- XIAOJIAN LIU ET AL: "Luvalley-Lite: An Effort to Balance Re-use and Re-coding", PARALLEL AND DISTRIBUTED PROCESSING WITH APPLICATIONS, 2009 IEEE INTERNATIONAL SYMPOSIUM ON, IEEE, PISCATAWAY, NJ, USA, 10 August 2009 (2009-08-10), pages 537-542, XP031515326, ISBN: 978-0-7695-3747-4
- WEIZHE ZHANG ET AL: "LVMM: A lightweight virtual machine memory management architecture for virtual computing environment", UNCERTAINTY REASONING AND KNOWLEDGE ENGINEERING (URKE), 2011 INTERNATIONAL CONFERENCE ON, IEEE, 4 August 2011 (2011-08-04), pages 235-238, XP031933948, DOI: 10.1109/URKE.2011.6007806 ISBN: 978-1-4244-9985-4

## Description

### Technical Field

The present invention relates to a computer system operated by a virtual computer that requires real-time processing in a server virtualized environment and, more particularly, to a method of scheduling of virtual computers running on a computer having a limited CPU resource.

### Background Art

Server virtualization technologies are attracting attention because of the advantages that, by executing a two or more virtual machines (VMs) on one unit of a physical computer thereby to reduce the number of needed physical computers, the computer operation cost, the computer installation space, the computer power dissipation, and so on can be saved. To provide these advantages, real-time processing is required by applications running in these virtual computers. However, it should be noted that, if a physical computer has a CPU resource enough for allocating to the virtual computers connected thereto, a technique for performance assurance such as exclusive allocation of the CPU resource exists; on the other hand, in a computer environment where the CPU resource is not enough, it is difficult to provide the sufficient assurance of real-time processing. Further, in a situation where interrupts from external apparatuses such as network devices connected to computers occur frequently, the processing of applications running inside a virtual computer are delayed, thereby further worsening this situation. In such a computing situation, a control system is also required to assure the real-time processing of the applications on the virtual computer.

### Summary of Invention

### Technical Problem

Regarding prior art, in US Patent application US 2011/083132 A1, a mechanism for prioritized scheduling of virtual machines is described. The method includes receiving a control of a virtual machine managed by a virtual machine monitor on a host machine and executing a prioritization task involving a hardware emulation of the virtual machine and determining an interactivity statistic of the virtual machine based on a hardware type factor of the hardware emulation of the virtual machine.

In Japanese Patent Application number JP 2011-198027, in a schedule method in a virtual computer, an application to be processed by the virtual computer is separated into units of threads which are processed by two or more virtual computers in a divided manner, thereby scheduling the execution sequence of the virtual computers in an application processing sequence. However, with a system configured by two or more applications, it is difficult, when considering the exclusive use of resources, to determine the execution sequence of virtual computers only on the basis of the processing order of applications. In addition, because of the difference between the CPU loads (and the processing performances) of the virtual computers, it is difficult to execute proper processing operations in a multiple-CPU environment configured by two or more CPUs, thereby preventing the efficient CPU resource usage in a physical computer.

In order to overcome the above-mentioned problems, it is an objective of the present invention to provide virtual computer scheduling technologies that assure the real-time processing of applications to be processed in virtual computers according to a schedule method of a virtualization system configured by two or more virtual computers that execute large-scale applications in a physical computer environment in which one or more CPU resources are available.

### Solution to Problem

Physical computers and virtual computers share a physical NIC through which to communicate with computer servers, controllers, and other external apparatuses. With a computer system on which a host OS and two or more virtual computers are installed, a VM scheduler control block is installed on the host OS in each computer mentioned above. In addition, on each virtual computer, a guest OS operates to do execution processing of each application running on the virtual computer. An in-VM schedule control block is installed on the guest OS for determining the execution sequence of applications by the execution priority group of the above-mentioned application. Note that it is assumed that the host OS have a schedule function for allocating a CPU resource to each virtual computer and have a virtualization program having an interrupt processing function for interrupts from external apparatuses to the virtual computer concerned. Further, it is assumed that the host OS have a schedule function for executing an application by allocating the CPU resource allocated from the host OS to each virtual computer to an application inside the virtual computer and a function for processing interrupts sent from the virtualization program on the host OS.

First, the in-VM schedule control block operating on the guest OS groups the applications in a virtual computer by priority. In addition, in the head and tail of each group, applications to be executed first and last in a group prepared by the in-VM schedule control block are registered.

There are two or more priority groups described above. Each priority group has the identifier indicative of a priority. In the present invention, "L1" is indicative of the top priority group and "Ln" is indicative of the lowest priority group. The in-VM schedule control block manages the processing time of each priority group such that all applications belonging to any of these groups "L1" through "Ln" are ensured for the processing by a certain deadline. The processing time of each group is managed by the activation time of the head application of the above-mentioned group and the end time for the tail application. The above-mentioned deadline design needs to be adjusted by the system requirements provided by the present invention.

It should be noted that the in-VM schedule control block of each guest OS has communication means for communication with the VM scheduler control block on the host OS in order to notify the VM scheduler control block on the host OS of the internal schedule state of each virtual computer. For the VM scheduler control block on the host OS to understand the internal schedule state of each virtual computer, the in-VM schedule control block on the guest OS notifies the VM scheduler control block on the host OS of the start of the head application and the end of the tail application of the priority group in the virtual computer.

However, in the "Ln" priority group having the lowest priority, the above-mentioned notice is not executed. Because the overhead of the notice from a virtual computer to the host OS is heavy, the mitigation of the above-mentioned overhead is executed by not managing the start and end of a lower priority group. The VM scheduler control block on the host OS can understand the priority of an application being run on each virtual computer by the notice of the start and end times of applications from a higher priority group other than "Ln."

A virtual computer to be allocated to the CPU resource is selected from the execution priority in a virtual computer. Hence, the VM scheduler control block on the host OS always records and manages the priority of each priority group as the execution state of each virtual computer and lowers the priority of the virtual computer from which the notice was given by the end notice of a higher priority group. Consequently, the virtual computer to which the CPU resource is to be allocated with the top priority among two or more virtual computers can be understood.

It should be noted that the deadline to be followed by each virtual computer is monitored and, even with a virtual computer having a lower current execution priority, the virtual computer approaching the deadline is adjusted to the top priority, thereby making the virtual computer always follow the deadline. A lower priority group such as "Ln" is schedule-controlled not by the schedule control based on the deadline by the notice from the in-VM schedule control block in a virtual computer to the host OS of the start of the head application and the end of the tail application, but by the Quota time for allocating the CPU resource to be described later.

On the other hand, in the interrupt processing, an interrupt management control block is installed in the VM scheduler control block on the host OS in order to limit the number of interrupts allowed with in the deadline of a virtual computer. The limited number of interrupts is managed as a limit value of the number of interrupts obtained by dividing the allowance of the deadline of each virtual computer by one-interrupt processing time. If an interrupt notice from a virtual program on the host OS is within the limited number of interrupts, an interrupt notice is given to the virtual computer concerned.

In giving an interrupt notice, change is made to the top priority regardless of the current execution priority of the virtual computer concerned and the host OS allocates the CPU resource to the virtual computer concerned. In the virtual computer concerned, interrupt processing is executed in the guest OS and the scheduler of the guest OS selects an application of a priority group set by the in-VM schedule control block, thereby allocating the CPU resource.

However, because the CPU resource cannot be allocated to a virtual computer that executes an application having an execution priority higher than that of the above-mentioned application, a Quota time for maintaining that priority is provided to the top priority setting by an interrupt notice. Namely, when the time allocated to the interrupt processing becomes the Quota time, the priority is adjusted to the original priority and the host OS always allocates the CPU resource to the virtual computer having the top priority.

As described, the application management method in a priority group by the in-VM schedule control block in a virtual computer and the allocation of the CPU resource to a virtual computer by the VM scheduler control block on the host OS in accordance with a priority group being executed in the virtual computer allow the assurance of the real-time processing of applications in the virtual computer even in a system limited in CPU resource. In addition, the installation of the interrupt management control block on the VM scheduler control block on the host OS allows the assurance of the real-time processing of applications in a virtual computer even in a computer environment high in interrupt processing load.

### Advantageous Effects of Invention

According to the present invention, the CPU resource allocation of a virtual computer is managed on the basis of the deadline of a priority group of a processing application in the virtual computer by the VM scheduler control block, so that the assurance of real-time processing can be provided even to a computer system limited in CPU resource. In addition, in the operation of a virtual computer that uses an external network on which external interrupts often occur, the number of interrupts and processing operations is limited on the basis of the deadline of a priority group of processing applications in the virtual computer, thereby providing the assurance of real-time processing.

### Brief Description of Drawings

Figure 1 is an overall configurational diagram illustrating schedule control of a virtual computer of the present invention.
Figure 2 is a configurational diagram illustrating an in-VM schedule management table of the present invention.
Figure 3 is a configurational diagram illustrating a VM management table of the present invention.
Figure 4 is a configurational diagram illustrating a timer management table of the present invention.
Figure 5 is a configurational diagram illustrating an interrupt management table of the present invention.
Figure 6A is a schematic diagram illustrating notice IF processing of the present invention.
Figure 6B is a schematic diagram illustrating notice IF processing of the present invention.
Figure 7 is a flowchart indicative of an in-VM schedule program of the present invention.
Figure 8 is a flowchart indicative of end processing of the in-VM schedule program of the present invention.
Figure 9 is an overall flowchart of the virtualization system of the present invention.
Figure 10 is a flowchart indicative of a VM deadline management program of the present invention.
Figure 11 is a flowchart indicative of execution VM selection processing of the VM deadline management program of the present invention.
Figure 12 is a flowchart indicative of a timer event management program of the present invention.
Figure 13 is a flowchart indicative of external event processing of the present invention.
Figure 14 is a flowchart indicative of a Quota management processing of the present invention.
Figure 15 is a flowchart indicative of an interrupt management program of the present invention.

### Description of Embodiments

The following describes one embodiment of the present invention with reference to the drawings. It should be noted that the present invention is not limited to the embodiment described herein and therefore any application examples matching the concept of the present invention are equivalent thereto.

### (Overall configurational diagram)

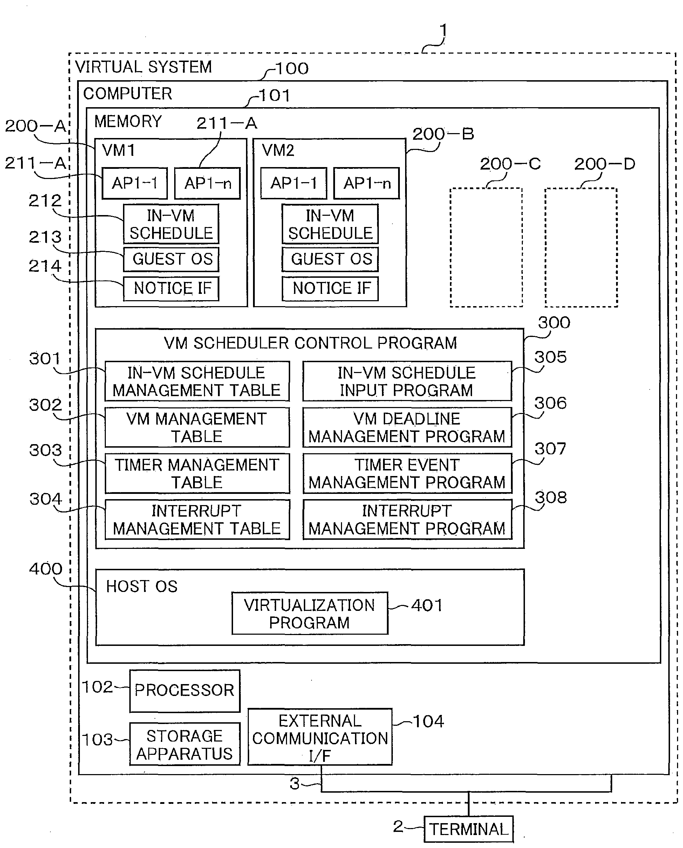

Now, referring to Figure 1, there is shown an overall configurational diagram illustrating schedule control of a virtual machine of one embodiment of the present invention. The schedule control of the virtual machine is configured of a virtualization system 1, a terminal 2, and an external network 3. The virtualization system 1 is configured of one computer. A computer 100 has a memory 101, a processor 102, a storage apparatus 103, and an external communication interface 104. The memory 101 stores a host operating system 400 (abbreviated as a host OS in the drawing), a VM scheduler control program 300, and one or more virtual machine environments 200 (abbreviated as VM in the drawing). The host OS 400 stores a virtualization program 401.

The VM scheduler control program 300 is configured of an in-VM schedule management table 301, a VM management table 302, a timer management table 303, an interrupt management table 304, an in-VM schedule input program 305, a VM deadline management program 306, a timer event management program 307, and an interrupt management program 308. The VM 200 is configured of an application 211 (abbreviated as an AP in the drawing), an in-VM schedule 212, a guest operating system 213 (abbreviated as a guest OS in the drawing), and a notice interface 214 (the interface abbreviated as an I/F in the drawing). In Figure 1, a VM1 (200-A) and a VM2 (200-B) indicated by solid lines and other VMs 200 indicated by dotted lines are shown in the computer 100, for example, the number of units of VMs being not especially limited to this number.

The terminal 2 and the computer 100 are interconnected through the external network 3. In the computer 100, the external network 3 is connected to the external communication I/F 104.

The terminal 2 can communicate with the virtualization system 1 through the external network 3.

The storage apparatus 103 of the computer node 100 stores the host OS 400, the VM scheduler control program 300 (the program and various kinds of table information), and the AP 211, the in-VM schedule 212, the guest OS 213, and notice I/F 214 that make up the VM 200. The processor 102 develops the host OS 400, the VM scheduler control program 300, and the components of the VM 200 from the storage apparatus 103 into the memory 101 and executes these programs, also processing interrupts from the external communication I/F 104. The external communication I/F 104 transmits and receives data with the terminal 2 through the external network 3.

The virtualization program 401 which is a program for creating the VM 200 for the management thereof notifies the VM 200 of an interrupt from the external communication I/F 104 through the notice I/F 214. By use of the virtualization program 401, the host OS 400 controls the execution of the VM scheduler control program 300 and the VM 200 and controls access to the external communication I/F 104 and the storage apparatus 103.

The VM 200 is a virtual execution environment created by the virtualization program 401 in which unique programs and the operating system can operate. If there are two or more VMs 200, then the programs and the operating systems running in different VMs 200 may be the same or different. Further, the programs and the operating systems running in different VMs 200 do not directly influence each other. The VM 200 has a unique identifier in the virtualization system 1; for example, the VM 200 in Figure 1 has an identifier "VM1" or "VM2."

The AP 211 is an application program running inside the VM 200. For the AP 211, AP1-1 (211-A) and AP1-n (211-B) are shown, but the number of APs 211 running inside the VM 200 is not limited thereto. The guest OS 213 controls the AP 211 by use of the in-VM schedule 212 in the VM 200 environment. The notice IF 214 receives processing results of the in-VM schedule 212 from the guest OS 213 and outputs the processing results to the VM scheduler control program 300.

Operating in the VM 200, the VM scheduler control program 300 receives schedule information of the APs 211 in the VM 200 from the in-VM schedule 212 through the notice IF 214. The VM scheduler control program 300 enters the schedule information of the APs 211 into the in-VM schedule input program 305. The in-VM schedule input program 305 stores the schedule information of the APs 211 into the in-VM schedule management table 301.

The in-VM schedule 212 running inside the VM 200 groups the APs 211 in accordance with the operation priorities thereof and schedules the runtime in the processor 102. A schedule method based on operation priorities will be described later.

The in-VM schedule 212 running inside the VM 200 notifies the VM deadline management program 306 running in the VM scheduler control program 300 of the operation start and end of the APs 211 in an operation priority group through the notice IF 214. On the basis of the operation start and end of the APs 211, the VM deadline management program adjusts the priority of the VMs 200. In addition, the VM deadline management program writes the operation start and end times to the interrupt management table 304 as a runtime deadline. In accordance with the priority of the VMs 200, the virtualization program 401 executes the VMs 200.

The in-VM schedule 212 running inside the VM 200 notifies the timer event management program 307 of timer registration of the AP 211 of the top priority group through the notice IF 214. The timer event management program 307 registers information for timer control into the timer management table 303 and leaves timer control to the virtualization program 401. When the timer fires (activated), the virtualization program 401 notifies the timer event management program 307 thereof. The timer event management program 307 notifies the interrupt management program 308 of the timer event. The interrupt management program 308 notifies the VM 200 of the timer event through the notice IF 214. The guest OS 213 processes the timer event from the interrupt management program 308 and notifies the AP 211 that made the timer registration of processing results.

The interrupt management program 308 notifies the VM 200 of the interrupt from the external communication IF 104 through the notice IF 214. The interrupt is processed by the guest OS 213.

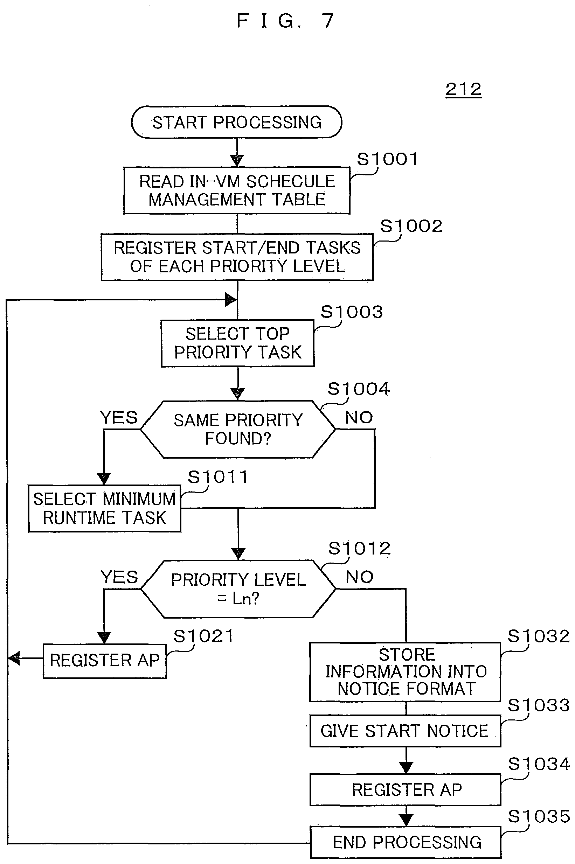

Details of the VM scheduler control program 300 will be described later with reference to Figure 7.

### (In-VM schedule management table)

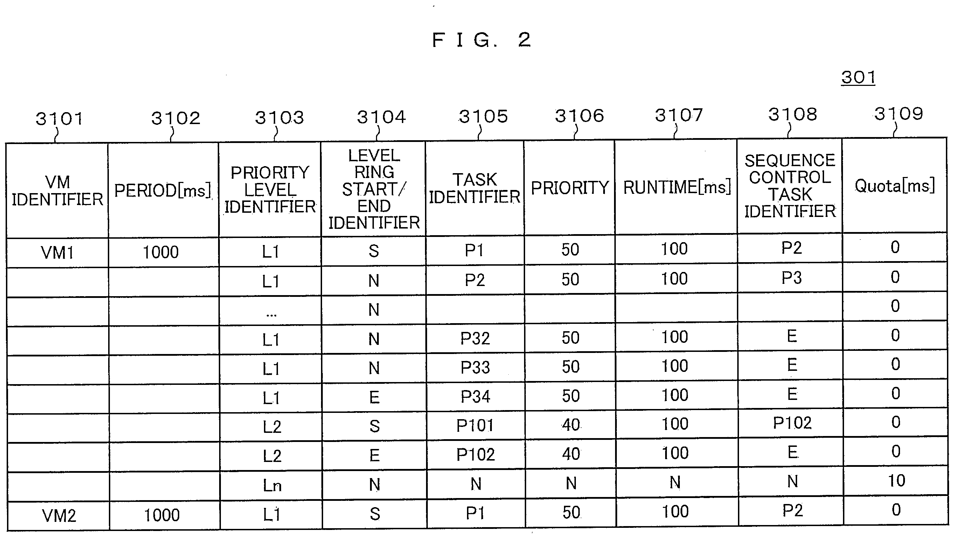

Referring to Figure 2, there is shown a configuration of the in-VM schedule management table 301 of one embodiment of the present invention. The in-VM schedule management table 301, stored in the in-VM schedule 212 and the VM scheduler control program 300, stores schedule information on the APs 211 of the VMs 200 that are the VM200-A and the VM200-B created inside the computer 100.

A VM identifier 3101 stores information for uniquely identifying each VMs 200 inside the computer 100. A period 3102 stores times at which all APs 211 are executed in each VM 200. In Figure 2, the value means that it takes one second (1000 ms) for the execution of AP1-1 to AP1-n running in the VM1 of the VM 200-A.

A priority level identifier 3103 groups the APs 211 into execution priorities for determining the sequence of execution of each AP 211 by the guest OS 213 and stores information for uniquely identifying each of these groups. In Figure 2, the priority of L1 group is highest followed by L2, L3, and Ln in this order.

The APs 211 belonging to the group are configured a ring (or a loop) which repeats from the AP 211 to be executed first to the AP 211 to be executed last in the same group. In order to configure the APs 211 belonging to the same group in a ring, it is necessary to register the first and last APs 211 of each priority group into the VM 200 in advance. Unlike applications registered by the user, the first and last APs 211 are the APs 211 with the in-VM schedule 213 registered.

A level ring start/end identifier 3104 stores "S" indicative of the start of the first AP 211 belonging to the group and "E" indicative of the end of the AP 211 to be executed last. If the AP 211 is neither the first nor the last of the group, then "N" is stored in the level ring start/end identifier 3104.

A task identifier 3105 stores information for uniquely identifying the APs 211 inside a group. A priority 3106 stores execution priority information on AP 211 which determines the sequence of each AP 211 to be executed by the guest OS 213. A runtime 3107 stores a time at which the AP 211 was executed by the guest OS 213 in unit of "ms." A sequence control task identifier 3108 stores the task identifier 3105 of an AP 211 to be executed next when the execution of an AP 211 ends. If information other than task identifier 3105 "E" is stored in the sequence control task identifier 3108, the corresponding AP 211 is executed. If "E" information is stored in the task identifier 3105 and "N" is stored in the level ring start/end identifier 3104, then the execution of another AP 211 in the same group is executed.

A Quota 3109 stores a time to be allocated to the execution of the APs 211 with priority level identifier 3103 belonging to "Ln."

Details of the in-VM schedule 212 will be described later with reference to Figure 7.

### (VM management table)

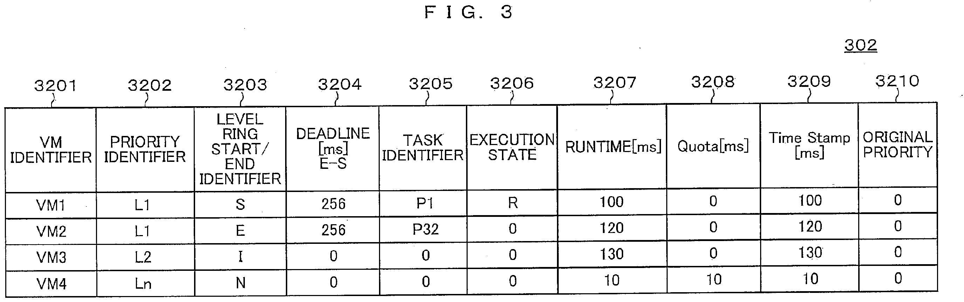

Referring to Figure 3, there is shown a configuration of the VM management table 302 of one embodiment of the present invention. The VM management table 302 is used for the virtualization program 401 to execute the VM 200.

A VM identifier 3201 stores information for uniquely identifying the VM 200 inside the computer 100. A priority identifier 3202 stores the priority level identifier 3103 to which the AP 211 being executed by the guest OS 213 belongs. The priority identifier 3202 is acquired from the information stored in a notice format 500 by the in-VM schedule 212 to be described later. A level ring start/end identifier 3203 stores information of start "S" of the first AP 211 in the priority group of the priority level identifier 3103 or information of end "E" of the last AP 211. "I" is indicative of a change of priority ID.

A deadline 3204 stores a time, in a unit of "ms," from the start of the first AP 211 of the priority group of the priority level identifier 3103 to the end of the last AP 211. A task identifier 3205 is acquired from information stored in the notice format 500.

An execution state 3206 stores an execution state of the VM 200 executed by the virtualization program 401. If the virtualization program 401 executes the VM 200, then "R" is stored in the execution state 3206. For the VM 200 not executed by the virtualization program 401, "0" is stored. If the processor 102 has a multi-core configuration, there are two or more VMs 200 that are executed by the virtualization program 401.

A runtime 3207 stores a runtime of the VM 200 executed by the virtualization program 401 in a unit of "ms." A Quota 3208 stores, if the priority group of the AP 211 executed by the guest OS 213 is "Ln," the Quota 3208 stores a time in which the corresponding VM 200 is executed by the virtualization program 401. Further, in the processing of the timer event management program 307 and the interrupt management program 308 to be described later, a runtime is stored in the Quota 3208 if the priority group has a priority other than "Ln."

With information of the Quota 3208 to be stored by the timer event management program 307 and the interrupt management program 308, the priority group of the AP 211 executed by the guest OS 213 may not match the priority identifier 3202 after the processing of a timer event and an interrupt by the guest OS 213 of the VM 200. Especially, if the AP 211 of "Ln" priority group is executed, the VM deadline management program 306 is not notified of the start and end, so that, if there is a VM 200 of a priority group with the priority identifier 3202 of the VM management table 302 being higher than "Ln," then the execution sequence by priority is not followed. In order to follow the execution sequence by priority, it is necessary to store the Quota 3208 into a timer event and interrupt notices.

TimeStamp 3209 stores the runtime 3207. This is because the VM deadline management program 307 to be described later determines the passing of the time of the Quota 3208. An original priority 3210 stores information of the priority identifier 3202 when storing priority "L1" into the priority identifier 3202 in the case of a timer event and an interrupt. Timer event and interrupt processing requires that the VM 200 is preferentially processed in order to assure the real-time processing of the control system, so that top priority "L1" must be provided regardless of the execution priority of the VM 200. After the passing of the Quota 3208, the priority of the 3210 is stored in the priority identifier 3202.

### (Timer management table)

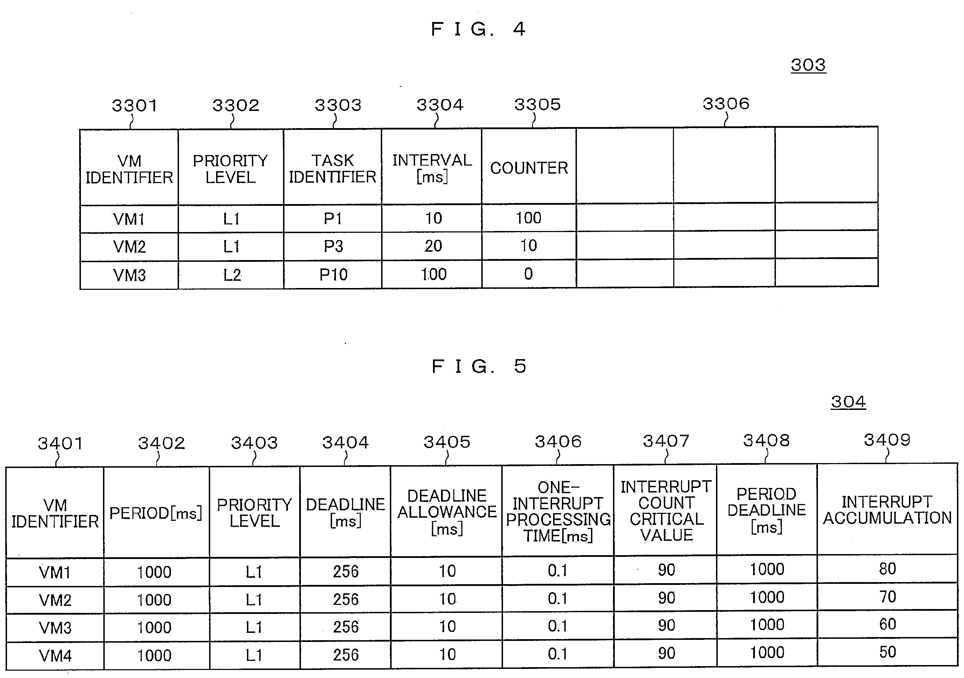

Referring to Figure 4, there is shown a diagram illustrating a configuration of the timer management table 303 of one embodiment of the present invention. The timer management table 303 is a table necessary for executing timer registration, by the virtualization program 401, of an AP 211 belonging to execution priority group "L1" to be executed by the guest OS 213 of the VM 200. The AP 211 of the group of "L1" is an application that requires real-time processing. Hence, the processing is executed the virtualization program 401 of the host OS 400 rather than the guest OS 213 of the VM 200. The in-VM schedule 212 notifies the timer event management program 307 of the timer registration of the AP 211 belonging to the group of "L1" through the notice IF 214.

A VM identifier 3301 stores information for uniquely identifying the VM 200 inside the computer 100. A priority level 3302 stores the priority level identifier 3103. A task identifier 3303 stores information for identifying the AP 211. An interval 3304 stores a timer event firing time. A counter 3305 stores a fire frequency per unit time (one second for example) of a timer event.

### (Interrupt management table)

Referring to Figure 5, there is shown a diagram illustrating a configuration of the interrupt management table 304 of one embodiment of the present invention. Assurance of the above-mentioned real-time processing of the AP 211 in a virtualization system requires to limit the number of interrupts that are processed by the VM 200. The number of interrupts is managed by the interrupt management program 308 to be described later.

A VM identifier 3401 stores information for uniquely identifying the VM 200 inside the computer 100. A period 3402 stores information of the period 3102 of the in-VM schedule management table 301. A priority level 3403 stores the VM identifier 3401 managed by the timer management table 303. A deadline 3404 stores the deadline 3204 of the VM management table 302. A deadline allowance 3405 stores an allowed time, in unit of "ms," that can assure real-time processing from the execution deadline time of the group of the AP 211 belonging to the priority level 3404.

A one-interrupt processing time 3406 stores a time, in unit of "ms," necessary for processing one interrupt from the external IF 102 by the guest OS 213 of the VM 200. An interrupt count critical value 3407 stores a value of 90% of a value obtained by dividing deadline allowance 3405 by the one-interrupt processing time 3406. Storing 90% provides an allowance of 10%. A period deadline 3408 stores the period 3102 of the in-VM schedule management table 301. An interrupt accumulation 3409 stores the number of interrupts caused within a time of the period deadline 3408.

### (Overview of notice IF processing)

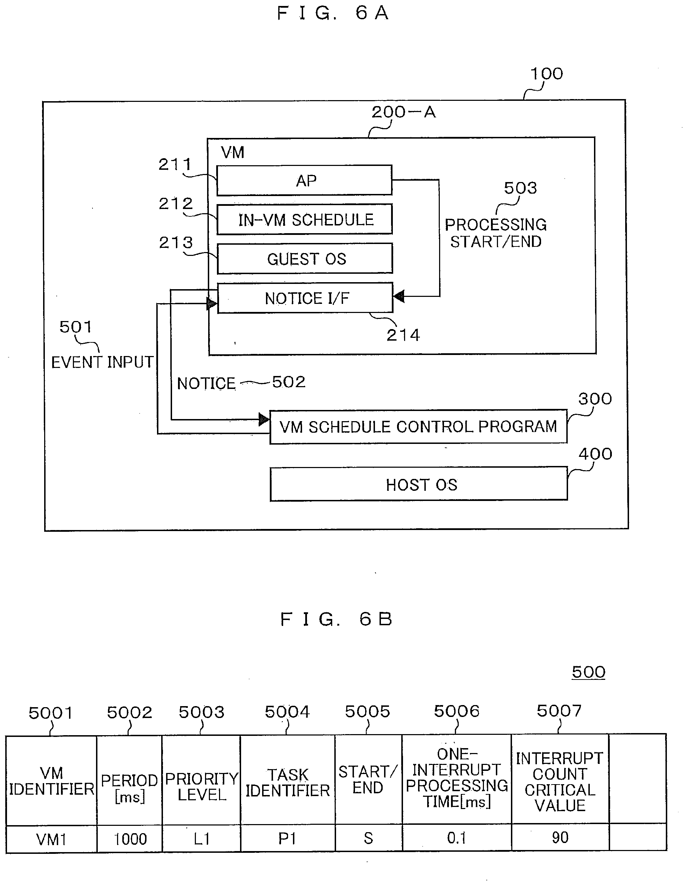

Referring to Figure 6A, there is shown a processing overview of the notice IF 214 of one embodiment of the present invention. Referring to Figure 6B, there is shown a configuration of the notice format 500. The notice format 500 stores information of the AP 211 at the start of the first AP 211 of a priority group and at the end of the last AP 211 (503), thereby notifying the VM scheduler control program 300 thereof (502). This notice causes the virtualization program 401 of the host OS 400 to determine an execution sequence of the VM 200. The virtualization program 401 processes an interrupt from the external communication IF 104 and a timer event, notifying the VM scheduler control program 300 thereof. The VM scheduler control program 300 sets "L1" to the priority identifier 3202 of the VM management table 302 and sets the Quota 3208 and notifies the VM 200 thereof through the notice IF 214 (501).

In the notice format 500 shown in Figure 6B, a VM identifier 5001, a period 5002, a priority level 5003, and a task identifier 5004 at the time of start correspond to those in the in-VM schedule management table 301 shown in Figure 2, respectively and are set by the first AP 211 at the start of the first AP 211 of a priority group, "S" being set to the start/end 5005. On the basis of the items 3406 and 3407 of the interrupt management table 304 shown in Figure 5, the VM scheduler control program 300 sets a one-interrupt processing time 5006 and an interrupt count critical value 5007. At the end of the last AP 211, the task identifier 5004 at the time of the end is set and "E" is set to the start/end 5005.

### (In-VM schedule flowchart)

Referring to Figure 7, there is shown a flowchart indicative of the in-VM schedule 212 of one embodiment of the present invention. Developing the VM scheduler control program 300 and the VM 200 into the memory 101 of the computer 100, the host OS 400 and the processor 102 start processing the VM 200. When the VM 200 starts processing, the guest OS 213 starts processing, thereby starting the processing of the in-VM schedule 212.

The in-VM schedule 212 reads the in-VM schedule management table 301 from the storage apparatus 103 into the memory 101 (S1001). The in-VM schedule 212 registers an AP 211 for start and an AP 211 for end into all priority level groups except "Ln" level group stored in the information of the priority level identifier 3103 of the in-VM schedule management table 301 (S1002).

The top priority AP 211 from the information of the priority 3106 of the in-VM schedule management table 301 is selected from the task identifier 3105 (S1003). The greater the number of the information of the priority 3106, the higher the priority. If there are two or more task identifiers 3105 having the same priority (Y of S1004), the task identifier 3105 with the minimum runtime is selected from the information of the runtime 3107 of the in-VM schedule management table 301 (S1011).

It is determined whether or not the priority level identifier 3103 to which the above-mentioned task identifier 3105 belongs is "Ln" (S1012). If the priority level is found to be "Ln," then the in-VM schedule 212 registers the AP 211 of the above-mentioned task identifier 3105 as an application to be activated by the guest OS 213 (S1021).

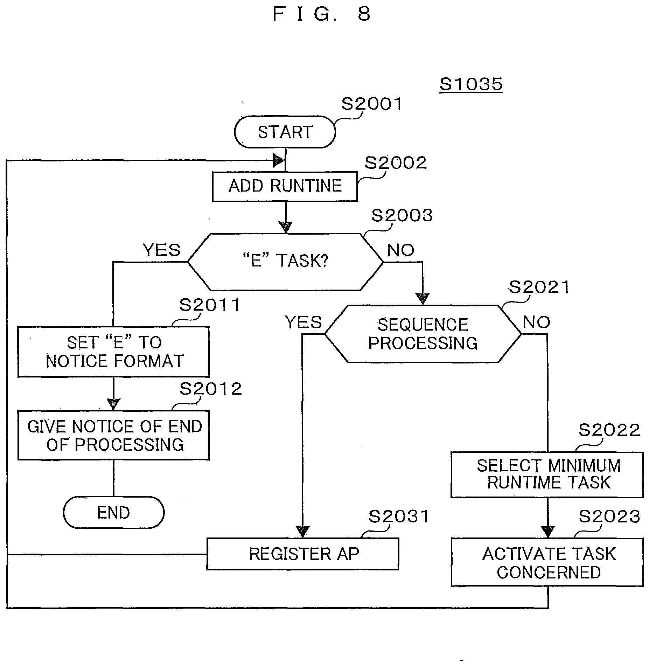

If the priority level is not "Ln," then the VM identifier 5001, the period 5002, the priority level 5003, and the task identifier 5004 are acquired information from the in-VM schedule management table 301 to be stored in the notice format 500. "S" is stored in the start/end 5005 (S1032). The notice format 500 is transmitted to the VM scheduler control program 300 through the notice IF 214, telling the start of the AP 211 (S1033). The in-VM schedule 212 registers the AP 211 of the task identifier 3105 as an application to be processed by the guest OS 213 (S1034). End processing is executed (S1035) (refer to Figure 8). Next, the in-VM schedule 212 activates all APs 211 belonging to the group of the priority level identifier 3103.

### (Flowchart of end processing)

Referring to Figure 8, there is shown a flowchart indicative of the end processing (1035) shown in Figure 7 of one embodiment of the present invention. The in-VM schedule 212 registers all APs 211 with a priority level identifier 3104 of the in-VM schedule management table 301 included in the priority group into the in-VM schedule 212 as applications to be activated by the guest OS 213.

A runtime in which the first AP 211 in the priority group of the priority level identifier 3104 has been processed by the guest OS 213 is added to the runtime 3107 of the in-VM schedule management table 301 shown in Figure 2 (S2002). It is determined from the level ring start/end identifier 3104 of the in-VM schedule management table 301 whether the AP 211 is the last AP 211 in the priority group of the priority level identifier 3104 (S2003). If the information of the start/end identifier 3104 is "E," it set to the notice format 500 to notify the VM scheduler control program 300 of the end of the processing of the application of the AP 211 in the priority group, thereby ending the processing (S2011, S2012).

If the information of the start/end identifier 3104 is not "E," then it is determined whether there is any AP 211 to be sequentially processed in the sequence control task identifier 3108 of the in-VM schedule management table 301 from the sequence control task identifier 3108 (S2021). If the information of the task identifier 3105 of the AP 211 is stored in the sequence control task identifier 3108, then this AP 211 is registered in the in-VM schedule 212 as an application to be activated by the guest OS 213 (S2031). If the information of the task identifier 3105 of the AP 211 is "0" in the sequence control task identifier 3108, then the task identifier 3105 having the minimum runtime 3107 is selected from the AP 211 in the same group and the selected AP 211 is registered in the in-VM schedule 212 as an application to be activated by the guest OS 213 (S2022, S2023). Next, the above-mentioned processing is executed on a next task.

### (Overall flowchart of virtualization system)

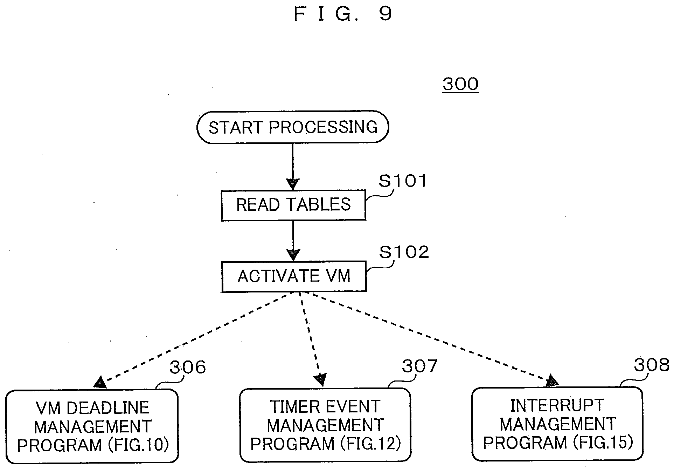

Referring to Figure 9, there is shown an overall flowchart indicative of the virtualization system 1 of one embodiment of the present invention. The overall processing of the virtualization system 1 is configured the activation processing of the VM scheduler control program 300 and the VM deadline management program 306, the timer event management program 307, and the interrupt management program 308.

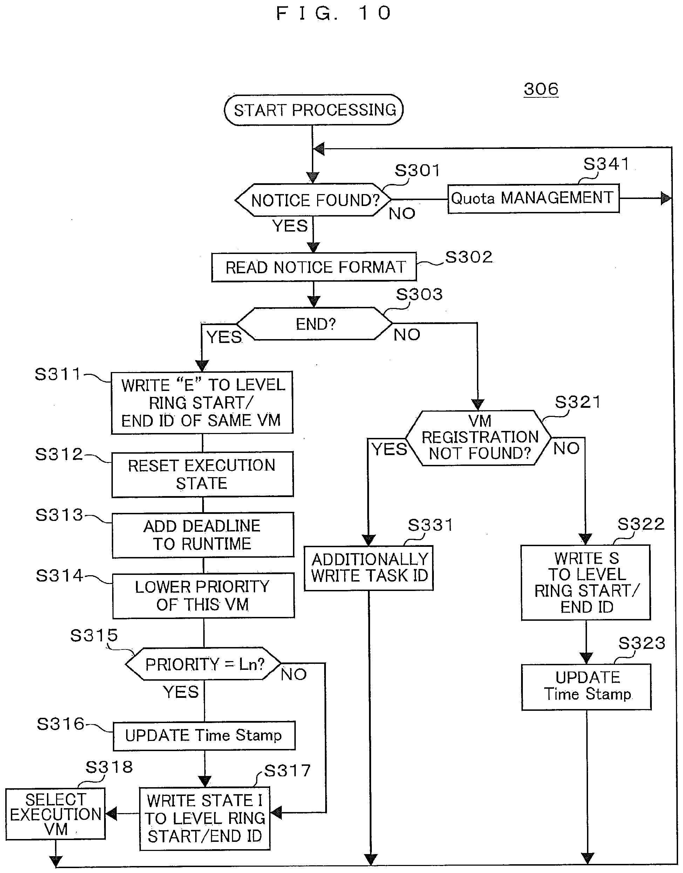

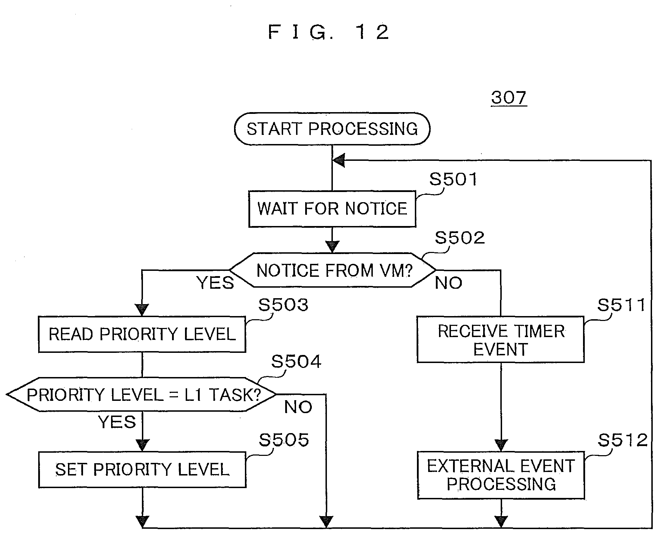

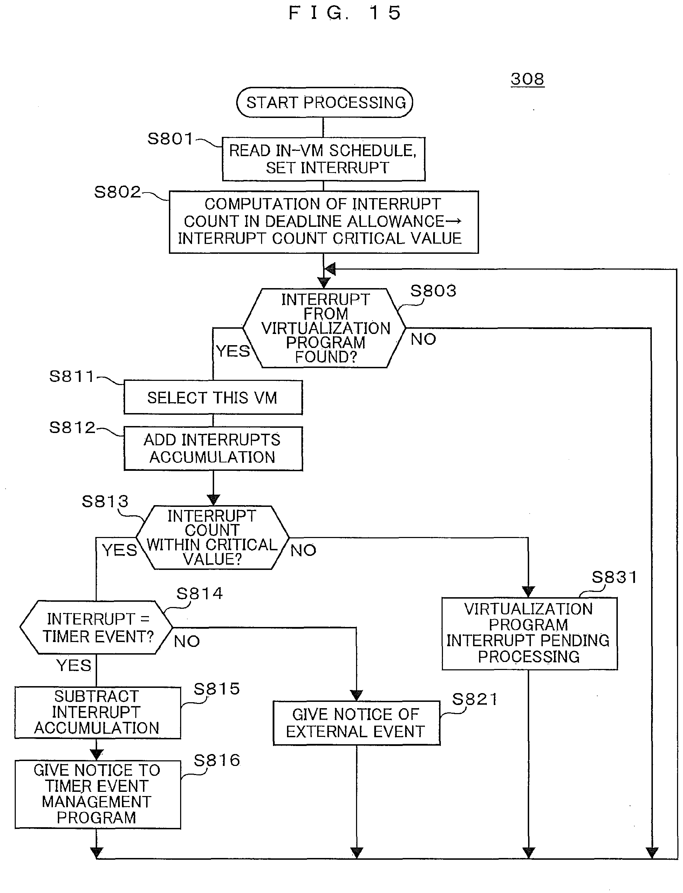

Loading the VM scheduler control program 300 and the VM 200 into the memory 101 of the computer 100, the host OS 400 and the processor 102 start processing the VM scheduler control program 300. When the processing of the VM scheduler control program 300 is started, the in-VM schedule management table 301, the VM management table 302, the timer management table 303, and the interrupt management table 304 are read from the storage apparatus 103 into the memory 101 (S101), upon which the VM 200 is activated (S102). After the reading of the tables S102, the VM scheduler control program 300 starts up each of the VM deadline management program 306 (refer to Figure 10), the timer event management program 307 (refer to Figure 12), and the interrupt management program 308 (refer to Figure 15) and waits until a notice comes or an interrupt is caused.

### (Flowchart of the VM deadline management program)

Referring to Figure 10, there is shown a flowchart indicative of the VM deadline management program 306 of one embodiment of the present invention. When a notice comes from the in-VM schedule 212 of the VM 200 (Y of S301), start/end information 5005 of the notice format 500 from the notice IF 214 is read (S302).

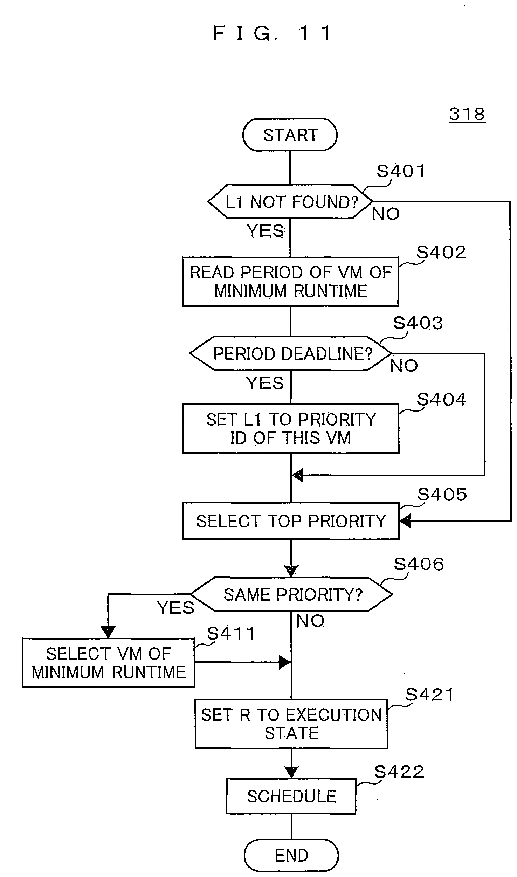

If the start/end information 5005 of notice format 500 is "E" indicative of end (Y of S303), then the task identifier 3205 of the VM management table 302 matching the task identifier 5004 of notice format 500 is searched for and "E" is written to the level ring start/end identifier 3203 associated with the found task identifier 3205 (S311). "0" is set to the execution state 3206, thereby indicating above-mentioned VM 200 is not execution state (S312). A difference between the time of the host OS 400 and the TimeStamp 3209 is stored into the deadline 3204 as a deadline. To the runtime 3207, the deadline 3204 is added (S313). The level of the priority identifier 3202 of the above-mentioned VM 200 is lowered by one (S314). For example, if the level of the priority 3202 is "L1," then "L2" is stored. If the level of the priority 3202 is "Ln" (Y of S315), then a time of the host OS 400 is stored in the TimeStamp 3209 (S316). In the level ring start/end identifier 3203, "I" indicative of a change in the priority identifier 3202 is stored (S317). The host OS 400 selects the VM 200 to be processed by the processor 102 (S318) (refer to Figure 11).

If the start/end information 5005 of the notice format 500 is not "E" (N of S303), then the task identifier 3205 of the VM management table 302 matching the task identifier 5004 of the notice format 500 for searched for (S321). If the found task identifier 3205 is the VM 200 not registered in the VM management table 302 (Y of S321), then the found task identifier 3205 is registered in the VM management table 302 (S331). If the found task identifier 3205 is the VM 200 registered in the VM management table 302 (N of S321), then "S" is stored in the level ring start/end identifier 3203 (S322) and the time of the host OS 400 is stored in the TimeStamp 3209 (S323).

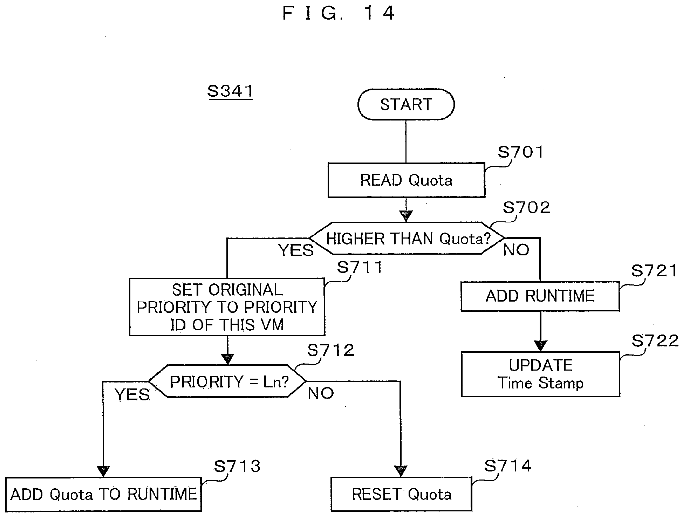

If no notice comes from the in-VM schedule 212 in the VM 200 (N of S301), then the processing of Quota 3208 of the in-VM schedule management table 301 is executed (S341) (refer to Figure 14). After the processing operations S318, 331, 323, and 341, a next notice is waited for.

### (Flowchart of execution VM selection)

Referring to Figure 11, there is shown a flowchart indicative of execution VM selection (S318 of Figure 10) of one embodiment of the present invention. The host OS 400 selects the VM 200 to be executed by the processor 102. The VM management table 302 is searched for the VM identifier 3201 with the priority 3202 being "L1" (S401). If there is no VM identifier 3201 storing "L1" priority (Y of S401), then the period 3102 of the VM identifier 3101 in the in-VM schedule management table 301 matching the VM identifier 3201 having the minimum runtime 3207 is read (S402). If a difference between the time of host OS 400 and the TimeStamp 3209 is equal to or higher than the length of period 3102, namely, equal to or higher than the period deadline (Y of S403), then the top priority "L1" is stored in the priority identifier 3202 corresponding to the VM identifier 3201 (S404). The priority identifier 3202 is searched for the VM identifier 3201 having the top priority (S405).

If there is the VM identifier 3201 storing "L1" priority (N of S401), then the priority identifier 3202 is searched for the VM identifier 3201 having the top priority (S405).

If there are two or more VM identifiers 3201 having the same priority identifier 3202 (Y of S406), then the VM identifier 3201 with the minimum runtime 3207 in the same row of the VM identifier 3201 is selected (S411). "R" is stored in the execution state 3206 in the same row of the selected VM identifier 3201, thereby indicating an execution standby state (S421). The selected VM identifier 3201 is registered in the host OS 400 as the VM 200 to be processed by the host OS 400 through the processor 102 (S422).

### (Flowchart of timer event management program)

Referring to Figure 12, there is shown a flowchart indicative of the timer event management program (307) of one embodiment of the present invention. A notice of timer event is waited for (S501). In the case of a notice from the in-VM schedule 212 in the VM 200 (Y of S502), the priority level 5003 of the notice format 500 is read (S503). If the priority level is "L1" (S504), then the priority level is set to the timer management table 303 and registered as a timer event of the host OS 400 (S505).

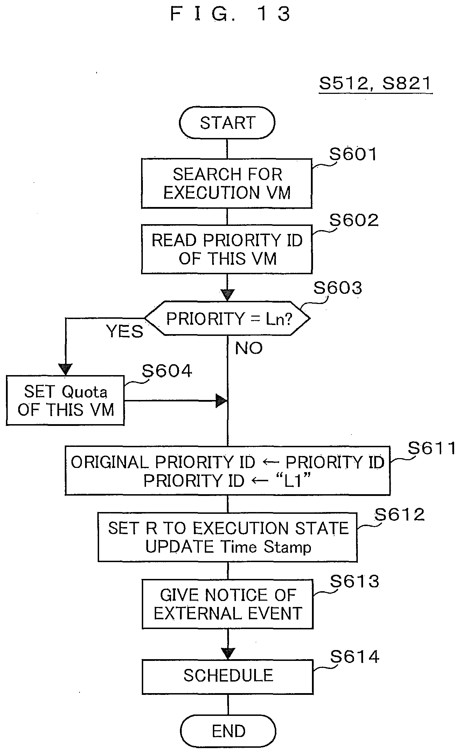

If the notice is not from the virtualization program 401 of the host OS 400 (N of S502), then the timer event is received (S511) and external event processing is executed (S512) (refer to Figure 13). After processing operations S505 and 512, a next notice is waited for.

### (Flowchart of external event processing)

Referring to Figure 13, there is shown a flowchart indicative of the external event processing (S512 of Figure 12, S821 of Figure 15) of one embodiment of the present invention. An external event is given to the VM scheduler control program 300 from the host OS 400. Information of the VM 200 to which an external event is given is stored in the external event.

From the received external event, the VM 200 that matches of the VM identifier 3201 of the VM management table 302 is selected (S601). The priority identifier 3202 of the row of the VM identifier 3201 is read (S602). If the priority identifier 3202 is "Ln" (Y of S603), then the value "10" thereof is stored in the Quota 3208 (S604).

If the priority identifier 3202 is not "Ln" (N of S603), then the priority identifier 3202 is stored in the original priority identifier 3210 and the top priority "L1" is stored in the priority identifier 3202 (S611). "R" indicative of execution wait is stored in the execution state 3206 and a host OS time is stored in the TimeStamp 3209 (S612). The above-mentioned external event is given to the VM scheduler control program 300 through the notice IF 214 (S613). The host OS 400 registers the VM identifier 3201 into the host OS 400 as the VM 200 to be processed by the processor 102 (S614).

### (Flowchart of Quota management processing)

Referring to Figure 14, there is shown a flowchart indicative of the Quota management processing (S341 of Figure 10) of one embodiment of the present invention. The Quota 3208 of the VM management table 302 selects a VM identifier 3201 other than "0." The Quota 3208 associated with the VM identifier 3201 is read (S701). If a difference between the time of host OS 400 and the TimeStamp 3209 exceeds the Quota 3208 (Y of S702), then the original priority identifier 3210, namely "0," is stored in the priority identifier 3202 associated with the above-mentioned VM identifier 3201 (S711).

If the priority identifier 3202 is "Ln" (Y of S712), then the Quota 3208 is added to the runtime 3207 (S713). If the priority identifier 3202 is not "Ln" (N of S712), then the Quota 3208 is added to the runtime 3207 and "0" is stored in the Quota 3208 (S714).

If the difference between the time of the host OS 400 and the TimeStamp 3209 is less than the Quota 3208 (N of S702), then the difference between the time of host OS 400 and the TimeStamp 3209 is added to the runtime 3207 (S721). The time of the host OS 400 is stored in the TimeStamp 3209 (S722). After processing operations S713, 714, and 722, the processing S341 ends.

### (Flowchart of interrupt management program)

Referring to Figure 15, there is shown a flowchart indicative of the interrupt management program (308) of one embodiment of the present invention. The in-VM schedule management table 301 is read, information is set from an item 3401 of the interrupt management table 304 to 3404, default value "10" is stored in the deadline allowance 3405, and "0.1" is stored in the one-interrupt processing time 3406 (S801). A value obtained by subtracting "10" from a value obtained by dividing the deadline allowance 3405 by the one-interrupt processing time 3406 is stored in the interrupt count critical value 3407 (S802). By subtracting "10" from the value obtained by dividing by the one-interrupt processing time 3406, an allowance for a critical value error caused by an error in the processing time of the one-interrupt processing time 3406 is set.

It is determined whether an interrupt is caused by the host OS 400 (S803). The interrupt information normally stores information of the VM 200 to which the interrupt is given. A row of the interrupt management table 304 with the information of the VM 200 included in the interrupt information matching the VM identifier 3401 is selected (S811). "1" is added to the interrupt accumulation 3409 (S812). It is determined whether the interrupt accumulation 3409 is less than the interrupt count critical value 3407 (S813).

If the interrupt accumulation 3409 is within the interrupt count critical value 3407 (Y of S813), then it is determined whether the interrupt is a timer event (S814). If the interrupt is found to be a timer event (Y of S814), then the interrupt accumulation 3409 is subtracted by "1" (S815) and the result is sent to the timer event management program 307 (S816). If the interrupt is found not a timer event (N of S814), then external event processing is called (S821) (refer to Figure 13).

If the interrupt accumulation 3409 exceeds the interrupt count critical value 3407 (N of S813), then interrupt pending processing (not shown) of the virtualization program 401 of the host OS 400 is called and an interrupt notice is delayed (S831).

## Claims

1. A schedule method for a virtual computer in a computer system on which a host OS (400) and a virtual computer are installed, wherein
an in-VM schedule processing block installed on said virtual computer
creates a priority group in accordance with a priority of each application (211) operating on said virtual computer and
manages, in a ring, said priority group by introducing a head task and a tail task of said priority group that give notices of operation start and end of a high priority group needing real-time processing; and
a VM scheduler control block on said host OS (400)
receives the notices of operation start and end of said priority group from the head task and the tail task of said priority group so as to determine a processing priority of said virtual computer.

2. The schedule method for the virtual computer according to claim 1, wherein
an interrupt management block installed on said VM schedule processing block executes control of assuring real-time processing of a virtual computer by limiting the number of interrupts from an external apparatus for each virtual computer.

3. The schedule method according to claim 1, wherein the notices from the in-VM schedule processing block include identifiers of the head task and the tail task and information on execution priorities for determining the sequence of execution of each application (211).

4. A virtual computer system on which a host OS (400) and a virtual computer are installed, wherein
an in-VM schedule processing block installed on said virtual computer
installs an in-VM schedule processing block on said virtual computer, said in-VM schedule processing block creating a priority group in accordance with a priority of each application (211) operating on said virtual computer and managing, in a ring, said priority group by introducing a head task and a tail task of said priority group that give notices of operation start and end of a high priority group needing real-time processing, and
installs a VM scheduler control block on said host OS (400), said VM scheduler control block receiving the notices of operation start and end of said priority group from the head task and the tail task of said priority group so as to determine a processing priority of said Virtual computer.

5. The virtual computer system according to claim 4, wherein
an interrupt management block for limiting the number of interrupts from an external apparatus for each virtual computer is installed on said VM schedule processing block so as to execute control for assuring real-time processing of a virtual computer.

6. The virtual computer system according to claim 4, wherein the notices from the in-VM schedule processing block include identifiers of the head task and the tail task and information on execution priorities for determining the sequence of execution of each application (211) .

## Patentansprüche

1. Planungsverfahren für einen virtuellen Computer in einem Computersystem, auf dem ein Host-OS (400) und ein virtueller Computer installiert sind, wobei
ein in-VM-Planungsverarbeitungsblock, der auf dem virtuellen Computer installiert ist,
eine Prioritätsgruppe in Übereinstimmung mit einer Priorität jeder Anwendung (211), die auf dem virtuellen Computer ausgeführt wird, erzeugt, und
in einem Ring die Prioritätsgruppe durch Einführen einer Anfangsaufgabe und einer Schlussaufgabe der Prioritätsgruppe, die einen Betriebsstart und ein Betriebsende einer Gruppe hoher Priorität, die eine Echtzeitverarbeitung benötigt, ankündigen, managt; und
ein VM-Planungssteuerblock auf dem Host-OS (400)
die Ankündigungen des Betriebsstarts und -endes der Prioritätsgruppe von der Anfangsaufgabe und der Schlussaufgabe der Prioritätsgruppe empfängt, um eine Verarbeitungspriorität des virtuellen Computers zu bestimmen.

2. Planungsverfahren für den virtuellen Computer nach Anspruch 1, wobei:
ein Unterbrechungsmanagementblock, der auf dem VM-Planungsverarbeitungsblock installiert ist, eine Steuerung des Gewährleistens einer Echtzeitverarbeitung eines virtuellen Computers durch Begrenzen der Anzahl von Unterbrechungen von einer externen Vorrichtung für jeden virtuellen Computer ausführt.

3. Planungsverfahren nach Anspruch 1, wobei die Ankündigungen von dem in-VM-Planungsverarbeitungsblock Kennungen der Anfangsaufgabe und der Schlussaufgabe und Informationen über Ausführungsprioritäten zum Bestimmen der Folge der Ausführung jeder Anwendung (211) enthalten.

4. Virtuelles Computersystem, auf dem ein Host-OS (400) und ein virtueller Computer installiert sind, wobei
ein in-VM-Planungsverarbeitungsblock, der auf dem virtuellen Computer installiert ist,
einen in-VM-Planungsverarbeitungsblock auf dem virtuellen Computer installiert, wobei der in-VM-Planungsverarbeitungsblock eine Prioritätsgruppe in Übereinstimmung mit einer Priorität jeder Anwendung (211), die auf dem virtuellen Computer ausgeführt wird, erzeugt, und Managen in einem Ring der Prioritätsgruppe durch Einführen einer Anfangsaufgabe und einer Schlussaufgabe der Prioritätsgruppe, die einen Betriebsstart und ein Betriebsende einer Gruppe hoher Priorität, die eine Echtzeitverarbeitung benötigt, ankündigen, und
einen VM-Planungssteuerblock auf dem Host-OS (400) installiert, wobei der VM-Planungssteuerblock die Ankündigungen des Betriebsstarts und -endes der Prioritätsgruppe von der Anfangsaufgabe und der Schlussaufgabe der Prioritätsgruppe empfängt, um eine Verarbeitungspriorität des virtuellen Computers zu bestimmen.

5. Virtuelles Computersystem nach Anspruch 4,
wobei ein Unterbrechungsmanagementblock zum Begrenzen der Anzahl von Unterbrechungen von einer externen Vorrichtung für jeden virtuellen Computer auf dem VM-Planungsverarbeitungsblock installiert ist, um eine Steuerung zum Gewährleisten einer Echtzeitverarbeitung eines virtuellen Computers auszuführen.

6. Virtuelles Computersystem nach Anspruch 4, wobei die Ankündigungen von dem in-VM-Planungsverarbeitungsblock Kennungen der Anfangsaufgabe und der Schlussaufgabe und Informationen über Ausführungsprioritäten zum Bestimmen der Folge der Ausführung jeder Anwendung (211) enthalten.

## Revendications

1. Procédé d'ordonnancement pour un ordinateur virtuel dans un système informatique sur lequel un système d'exploitation hôte (400) et un ordinateur virtuel sont installés, dans lequel
un bloc de traitement d'ordonnancement dans la machine virtuelle installé sur ledit ordinateur virtuel
crée un groupe de priorité en fonction d'une priorité de chaque application (211) fonctionnant sur ledit ordinateur virtuel et
gère, dans un anneau, ledit groupe de priorité en introduisant une tâche de tête et une tâche de queue dudit groupe de priorité qui fournissent des notifications de début et de fin de fonctionnement d'un groupe de priorité élevée nécessitant un traitement en temps réel ; et
un bloc de commande d'ordonnanceur de machine virtuelle sur ledit système d'exploitation hôte (400)
reçoit les notifications de début et de fin de fonctionnement dudit groupe de priorité en provenance de la tâche de tête et de la tâche de queue dudit groupe de priorité afin de déterminer une priorité de traitement dudit ordinateur virtuel.

2. Procédé d'ordonnancement pour l'ordinateur virtuel selon la revendication 1, dans lequel
un bloc de gestion d'interruptions installé sur ledit bloc de traitement d'ordonnancement de machine virtuelle exécute une commande pour assurer un traitement en temps réel d'un ordinateur virtuel en limitant le nombre d'interruptions en provenance d'un appareil externe pour chaque ordinateur virtuel.

3. Procédé d'ordonnancement selon la revendication 1, dans lequel les notifications en provenance du bloc de traitement d'ordonnancement dans la machine virtuelle incluent des identificateurs de la tâche de tête et de la tâche de queue et des informations sur les priorités d'exécution pour déterminer la séquence d'exécution de chaque application (211).

4. Système d'ordinateur virtuel sur lequel un système d'exploitation hôte (400) et un ordinateur virtuel sont installés, dans lequel
un bloc de traitement d'ordonnancement dans la machine virtuelle installé sur ledit ordinateur virtuel
installe un bloc de traitement d'ordonnancement dans la machine virtuelle sur ledit ordinateur virtuel, ledit bloc de traitement d'ordonnancement dans la machine virtuelle créant un groupe de priorités en fonction d'une priorité de chaque application (211) fonctionnant sur ledit ordinateur virtuel et gérant, en anneau, ledit groupe de priorité en introduisant une tâche de tête et une tâche de queue dudit groupe de priorité qui fournissent des notifications de début et de fin de fonctionnement d'un groupe de priorité élevée nécessitant un traitement en temps réel, et
installe un bloc de commande d'ordonnanceur de machine virtuelle sur ledit système d'exploitation hôte (400), ledit bloc de commande d'ordonnanceur de machine virtuelle recevant les notifications de début et de fin de fonctionnement dudit groupe de priorité en provenance de la tâche de tête et de la tâche de queue dudit groupe de priorité afin de déterminer une priorité de traitement dudit ordinateur virtuel.

5. Système d'ordinateur virtuel selon la revendication 4, dans lequel
un bloc de gestion d'interruptions pour limiter le nombre d'interruptions en provenance d'un appareil externe pour chaque ordinateur virtuel est installé sur ledit bloc de traitement d'ordonnancement de machine virtuelle afin d'exécuter une commande pour assurer le traitement en temps réel d'un ordinateur virtuel.

6. Système d'ordinateur virtuel selon la revendication 4, dans lequel
les notifications en provenance du bloc de traitement d'ordonnancement dans la machine virtuelle incluent des identificateurs de la tâche de tête et de la tâche de queue et des informations sur les priorités d'exécution pour déterminer la séquence d'exécution de chaque application (211).
